(19) Europäisches Patentamt
European Patent Office
Office européen des brevets

(11) **EP 4 678 493 A1**

(12) **EUROPEAN PATENT APPLICATION**
published in accordance with Art. 153(4) EPC

(43) Date of publication:
**14.01.2026 Bulletin 2026/03**

(21) Application number: **24783964.0**

(22) Date of filing: **29.01.2024**

(51) International Patent Classification (IPC):
**B60W 30/09** (2012.01) **B62D 5/00** (2006.01)
**B62D 6/00** (2006.01)

(52) Cooperative Patent Classification (CPC):
**B62D 15/0265; B60W 30/09; B60W 60/00**

(86) International application number:
**PCT/CN2024/074535**

(87) International publication number:
**WO 2024/207879 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.04.2023 CN 202310388931**

(71) Applicant: **Shenzhen Yinwang Intelligent Technologies Co., Ltd.**
**Shenzhen, Guangdong 518110 (CN)**

(72) Inventors:
• **CHEN, Guangda**
**Shenzhen, Guangdong 518129 (CN)**
• **ZHU, Xuechen**
**Shenzhen, Guangdong 518129 (CN)**
• **ZHANG, Renxie**
**Shenzhen, Guangdong 518129 (CN)**
• **QI, Renjie**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **VEHICLE CONTROL METHOD, APPARATUS, AND VEHICLE**

(57) A vehicle control method includes: determining a resistance torque based on a safety risk of a vehicle and a torque of a steering operation input by a driver, where the resistance torque acts on a steering wheel of the vehicle to resist the torque of the steering operation, and the resistance torque is gradually increased when the safety risk of the vehicle is high. In this way, the driver feels the resistance torque from the steering wheel during the steering operation, and the driver is reminded that the current steering operation may affect driving safety. This avoids impact on the driving safety caused by the steering operation input by the driver due to a subconscious action. An apparatus for implementing the vehicle control method and a vehicle are further provided.

200

Determine a resistance torque based on a safety risk of a vehicle and a torque of a steering operation input by a driver, where the resistance torque acts on a steering wheel of the vehicle to resist the torque of the steering operation, and when the safety risk of the vehicle is greater than or equal to a risk threshold, the resistance torque gradually increases as the torque of the steering operation increases, or when the safety risk of the vehicle is less than the risk threshold, the resistance torque gradually decreases as the torque of the steering operation increases — S210

**FIG. 3**

**Description**

This application claims priority to Chinese Patent Application No. 202310388931.2, filed with the China National Intellectual Property Administration on April 3, 2023 and entitled "VEHICLE CONTROL METHOD AND APPARATUS, AND VEHICLE", which is incorporated herein by reference in its entirety.

**TECHNICAL FIELD**

This application relates to the field of intelligent vehicle technologies, and in particular, to a vehicle control method and apparatus, and a vehicle.

**BACKGROUND**

In an assisted driving function of an intelligent vehicle, the intelligent vehicle can determine traveling safety by sensing ambient environment information, and actively intervene in driving behavior of the vehicle when a safety risk exists in a traveling process, to ensure the traveling safety of the vehicle. For example, when a safety risk between the vehicle and an ambient traveling vehicle, a person, an object, or the like is identified based on sensing, the intelligent vehicle can actively intervene in steering of the vehicle.

However, when the intelligent vehicle actively intervenes in steering control of the vehicle by using the assisted driving function, a driver is likely to subconsciously resist the active steering intervention of the vehicle due to panic. In the conventional technology, the intelligent vehicle exits steering control of the assisted driving function on the vehicle based on a steering operation of the driver resisting the active steering intervention of the vehicle, and returns driving right to the driver. In this case, the driver cannot respond, in short time, to a driving risk that is about to occur, and therefore, collision is likely to occur. This greatly affects driving safety and another road traffic participant.

**SUMMARY**

Embodiments of this application provide a vehicle control method and apparatus, and a vehicle, to provide a steering control solution, so as to avoid impact on driving safety caused by a steering operation input by a driver due to a subconscious action, and improve driving safety.

In a first aspect, an embodiment of this application provides a vehicle control method, including: determining a resistance torque based on a safety risk of a vehicle and a torque of a steering operation input by a driver, where the resistance torque acts on a steering wheel of the vehicle to resist the torque of the steering operation. When the safety risk of the vehicle is greater than or equal to a risk threshold, the resistance torque gradually increases as the torque of the steering operation increases; or when the safety risk of the vehicle is less than the risk threshold, the resistance torque gradually decreases as the torque of the steering operation increases.

According to the vehicle control method provided in the first aspect, when the safety risk of the vehicle is high, a control chip gradually increases the resistance torque, so that a driver senses the resistance torque from the steering wheel during the steering operation, and the driver is reminded that the current steering operation may affect driving safety, to avoid impact on driving safety caused by the steering operation input by the driver due to a subconscious action. When the safety risk of the vehicle is low, the control chip gradually decreases the resistance torque, and complies with a driving intention of the driver. This improves driving experience.

In a possible implementation, the safety risk of the vehicle is greater than or equal to the risk threshold, and when the torque of the steering operation is less than or equal to a torque threshold, the resistance torque gradually increases as the torque of the steering operation increases, or when the torque of the steering operation is greater than the torque threshold, the resistance torque gradually decreases.

According to the vehicle control method provided in this implementation, when the torque of the steering operation is greater than the torque threshold, it indicates that the driver has a strong control intention on the vehicle, that is, the driver expects to perform steering control on the vehicle. In this case, the resistance torque may be gradually decreased, so that the driver performs steering control on the vehicle, and the steering control intention of the driver is met.

In a possible implementation, the determining resistance torque based on a safety risk of a vehicle and a torque of a steering operation input by a driver includes: determining the resistance torque based on the safety risk of the vehicle, and a torque magnitude and torque duration of the steering operation. When the safety risk of the vehicle is greater than or equal to the risk threshold, the resistance torque gradually increases as the torque magnitude and the torque duration of the steering operation increase; or when the safety risk of the vehicle is less than the risk threshold, the resistance torque gradually decreases as the torque magnitude and the torque duration of the steering operation increase.

According to the vehicle control method provided in this implementation, the resistance torque is determined with reference to the torque magnitude of the steering operation and the torque duration, and a driving intention of the driver is accurately identified, to improve driving experience while ensuring driving safety.

In a possible implementation, the method further includes: determining a collaborative control coefficient based on the safety risk of the vehicle and the torque of the steering operation input by the driver, where the collaborative control coefficient indicates a weight of a first torque and/or a weight of the torque of the steering operation, and the first torque is a steering torque generated by a control chip when the driver inputs the steering operation; and coupling the first torque with the torque of the steering operation based on the collaborative control coefficient, to obtain a torque used to perform steering control on the vehicle.

According to the vehicle control method provided in this implementation, when the first torque is generated, the control chip determines, based on the torque magnitude and the torque duration of the steering operation input by the driver, a control degree of the driver for the vehicle, and couples the first torque with the torque of the steering operation based on the control degree of the driver for the vehicle, to perform steering control on the vehicle based on the torque obtained through coupling, avoid impact on the driving safety caused by the steering operation input by the driver due to a subconscious action, and improve driving safety.

In a possible implementation, when the safety risk of the vehicle is greater than or equal to the risk threshold, the weight of the first torque gradually increases as the torque of the steering operation increases; or when the safety risk of the vehicle is less than the risk threshold, the weight of the first torque gradually decreases as the torque of the steering operation increases.

According to the vehicle control method provided in this implementation, when the safety risk of the vehicle is high, the control chip gradually increases the weight of the first torque, to avoid impact on the driving safety caused by the steering operation input by the driver due to the subconscious action. When the safety risk of the vehicle is low, the control chip gradually decreases the weight of the first torque, to comply with the driving intention of the driver, thereby improving driving experience.

In a possible implementation, the safety risk of the vehicle is greater than or equal to the risk threshold, and when the torque of the steering operation is less than or equal to the torque threshold, the weight of the first torque gradually increases as the steering operation increases, or when the torque of the steering operation is greater than the torque threshold, the weight of the first torque gradually decreases.

According to the vehicle control method provided in this implementation, when the driver does not have the steering control intention, the torque of the steering operation can be positively correlated with the weight of the first torque, and negatively correlated with the weight of the torque of the steering operation. When the driver does not have the steering control intention, the torque generated by the control chip is complied with, to avoid the impact on the driving safety caused by the steering operation input by the driver due to the subconscious action, and improve driving safety. When the driver has the steering control intention, the torque of the steering operation is negatively correlated with the weight of the first torque, and the steering operation of the driver is complied with, to improve driving experience.

In a possible implementation, the determining a collaborative control coefficient based on the safety risk of the vehicle and the torque of the steering operation input by the driver includes: determining the collaborative control coefficient based on the safety risk of the vehicle and the torque magnitude and the torque duration of the steering operation. When the safety risk of the vehicle is greater than or equal to the risk threshold, the weight of the first torque gradually increases as the torque magnitude and the torque duration of the steering operation increase; or when the safety risk of the vehicle is less than the risk threshold, the weight of the first torque gradually decreases as the torque magnitude and the torque duration of the steering operation increase.

According to the vehicle control method provided in this implementation, the torque magnitude and the torque duration of the steering operation may reflect the control intention of the driver. When the driver does not have the steering control intention, the torque and the duration of the steering operation can be positively correlated with the weight of the first torque, and negatively correlated with the weight of the torque of the steering operation. When the driver does not have the steering control intention, the torque generated by the control chip is complied with, to avoid the impact on the driving safety caused by the steering operation input by the driver due to the subconscious action, and improve driving safety.

In a possible implementation, the determining a collaborative control coefficient based on the safety risk of the vehicle and the torque of the steering operation input by the driver includes: performing fuzzification processing on the safety risk of the vehicle to obtain a fuzzification result of the safety risk, and performing fuzzification processing on the torque of the steering operation to obtain a fuzzification result of the torque of the steering operation; querying a fuzzy rule library based on the fuzzification result of the safety risk and the fuzzification result of the torque of the steering operation; and performing defuzzification processing on a query result to obtain the collaborative control coefficient.

According to the vehicle control method provided in this implementation, the collaborative control coefficient is accurately evaluated based on a fuzzy algorithm, and steering control is performed on the vehicle, so that the control operation helps improve driving safety.

In a possible implementation, the method further includes: determining a lane departure distance and/or estimated time to collision based on road environment data of the vehicle, where the estimated time to collision indicates time before collision between the vehicle and an obstacle in a steering direction of the steering operation; and determining the safety risk of the vehicle based on the lane departure distance and/or the estimated time to collision.

According to the vehicle control method provided in this implementation, both the lane departure distance and the estimated time to collision can reflect the safety risk of the vehicle, and a safety risk coefficient can be accurately determined based on the lane departure distance and/or the estimated time to collision, so that the safety risk of the vehicle is accurately predicted.

In a second aspect, an embodiment of this application provides a control apparatus, including: a control analysis module, configured to determine a resistance torque based on a safety risk of a vehicle and a torque of a steering operation input by a driver, where the resistance torque acts on a steering wheel of the vehicle to resist the torque of the steering operation. When the safety risk of the vehicle is greater than or equal to a risk threshold, the resistance torque gradually increases as the torque of the steering operation increases; or when the safety risk of the vehicle is less than the risk threshold, the resistance torque gradually decreases as the torque of the steering operation increases.

In a possible implementation, the safety risk of the vehicle is greater than or equal to the risk threshold, and when the torque of the steering operation is less than or equal to a torque threshold, the resistance torque gradually increases as the torque of the steering operation increases, or when the torque of the steering operation is greater than the torque threshold, the resistance torque gradually decreases.

In a possible implementation, the control analysis module is specifically configured to determine the resistance torque based on the safety risk of the vehicle, and a torque magnitude and torque duration of the steering operation. When the safety risk of the vehicle is greater than or equal to the risk threshold, the resistance torque gradually increases as the torque magnitude and the torque duration of the steering operation increase; or when the safety risk of the vehicle is less than the risk threshold, the resistance torque gradually decreases as the torque magnitude and the torque duration of the steering operation increase.

In a possible implementation, the control analysis module is further configured to determine a collaborative control coefficient based on the safety risk of the vehicle and the torque of the steering operation input by the driver, where the collaborative control coefficient indicates a weight of a first torque and/or a weight of the torque of the steering operation, and the first torque is a steering torque generated by a control chip when the driver inputs the steering operation. The apparatus further includes a torque coupling module, and the torque coupling module is configured to couple the first torque with the torque of the steering operation based on the collaborative control coefficient, to obtain a torque used to perform steering control on the vehicle.

In a possible implementation, when the safety risk of the vehicle is greater than or equal to the risk threshold, the weight of the first torque gradually increases as the torque of the steering operation increases; or when the safety risk of the vehicle is less than the risk threshold, the weight of the first torque gradually decreases as the torque of the steering operation increases.

In a possible implementation, the safety risk of the vehicle is greater than or equal to the risk threshold, and when the torque of the steering operation is less than or equal to the torque threshold, the weight of the first torque gradually increases as the steering operation increases, or when the torque of the steering operation is greater than the torque threshold, the weight of the first torque gradually decreases.

In a possible implementation, the control analysis module is specifically configured to determine the collaborative control coefficient based on the safety risk of the vehicle and the torque magnitude and the torque duration of the steering operation. When the safety risk of the vehicle is greater than or equal to the risk threshold, the weight of the first torque gradually increases as the torque magnitude and the torque duration of the steering operation increase; or when the safety risk of the vehicle is less than the risk threshold, the weight of the first torque gradually decreases as the torque magnitude and the torque duration of the steering operation increase.

In a possible implementation, the control analysis module is specifically configured to: perform fuzzification processing on the safety risk of the vehicle to obtain a fuzzification result of the safety risk, and perform fuzzification processing on the torque of the steering operation to obtain a fuzzification result of the torque of the steering operation; query a fuzzy rule library based on the fuzzification result of the safety risk and the fuzzification result of the torque of the steering operation; and perform defuzzification processing on a query result to obtain the collaborative control coefficient.

In a possible implementation, the control analysis module is further configured to: determine a lane departure distance and/or estimated time to collision based on road environment data of the vehicle, where the estimated time to collision indicates time before collision between the vehicle and an obstacle in a steering direction of the steering operation; and determine the safety risk of the vehicle based on the lane departure distance and/or the estimated time to collision.

For beneficial effect of the control apparatus provided in the second aspect and the possible implementations of the second aspect, refer to the beneficial effect achieved by the first aspect and the possible implementations of the first aspect. Details are not described herein again.

In a third aspect, an embodiment of this application provides an electronic device, including a processor and a memory. The memory is configured to store a computer program, and the processor is configured to invoke and run the computer program stored in the memory, to perform the method in the first aspect or the possible implementations.

In a fourth aspect, an embodiment of this application provides a chip, including a processor, configured to invoke computer instructions from a memory and run the computer instructions, so that a device in which the chip is installed performs the method in the first aspect or the possible implementations.

In a fifth aspect, an embodiment of this application provides a computer-readable storage medium, configured to store computer program instructions, where the computer program enables a computer to perform the method in the first aspect or the possible implementations.

In a sixth aspect, an embodiment of this application provides a computer program product, including computer program instructions, where the computer program instructions enable a computer to perform the method in the first aspect or the possible implementations.

In a seventh aspect, an embodiment of this application provides a vehicle, including a control apparatus. The control apparatus is configured to indicate the method in the first aspect or the possible implementations.

## BRIEF DESCRIPTION OF DRAWINGS

FIG. 1 is a diagram of a hardware structure of a vehicle according to an embodiment of this application;
FIG. 2 is a diagram of vehicle control according to an embodiment of this application;
FIG. 3 is a schematic flowchart of a vehicle control method according to an embodiment of this application;
FIG. 4 is a schematic flowchart of a vehicle control method according to an embodiment of this application;
FIG. 5a and FIG. 5b are diagrams of a membership function according to an embodiment of this application;
FIG. 6 is a diagram of a fuzzy rule library according to an embodiment of this application;
FIG. 7 is a block diagram of a control apparatus of a vehicle according to an embodiment of this application; and
FIG. 8 is a diagram of a structure of an electronic device according to an embodiment of this application.

## DESCRIPTION OF EMBODIMENTS

The following describes the technical solutions in embodiments of this application with reference to the accompanying drawings in embodiments of this application.

A vehicle in embodiments of this application may be an intelligent vehicle, for example, an autonomous driving vehicle that implements all functions as automatic control, or an assisted driving vehicle that implements some functions as automatic control to provide driving assistance. For ease of description, the vehicle is collectively referred to as a vehicle in the following. There may be six autonomous driving levels of vehicle driving automation, including L0 to L5. L0 indicates manual driving, L1 indicates driving automation, L2 indicates assisted driving, L3 indicates automatic assisted driving, L4 indicates autonomous driving, and L5 indicates unmanned driving. The technical solutions in this application are particularly applicable to vehicles at an autonomous driving level of L2 and above.

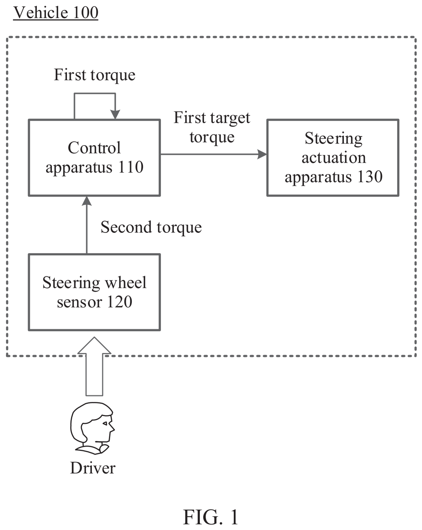

FIG. 1 is a diagram of a hardware structure of a vehicle according to an embodiment of this application. As shown in FIG. 1, a vehicle 100 includes a control apparatus 110, a steering wheel sensor 120, and a steering actuation apparatus 130. The control apparatus 110 is separately connected to the steering wheel sensor 120 and the steering actuation apparatus 130.

The control apparatus 110 may be configured to implement an advanced driving assistance system (advanced driving assistance system, ADAS) function, for example, may be a control chip of the ADAS. The control apparatus 110 is configured to implement automatic control of the vehicle, so that the vehicle implements autonomous driving or assisted driving. In a specific implementation, the control apparatus 110 may sense an ambient environment at any time by using a sensor (for example, a millimeter-wave radar, a lidar, a single/binocular camera, or satellite navigation) deployed on the vehicle in a traveling process of the vehicle, to implement identification, detection, and tracking of static and moving objects, and perform systematic calculation and analysis with reference to navigation map data. In this way, a driver can foresee possible danger in advance. This effectively improves vehicle driving comfort and safety. The control apparatus 110 may generate a torque of the vehicle by analyzing information about the sensed ambient environment, to implement automatic steering control on steering of the vehicle or assist the vehicle in steering control.

The steering actuation apparatus 130 may be implemented as an electric power steering (electric power steering, EPS) system. The steering actuation apparatus 130 may perform steering control on the vehicle based on a torque output by the steering wheel sensor 120 (for example, a steering wheel torque sensor) and/or the steering wheel sensor 120 (for example, a steering wheel angle sensor). Alternatively, in an automatic control process of the vehicle, the steering actuation apparatus 130 may perform steering control on the active steering vehicle based on a torque output by the control apparatus 110.

In this embodiment of this application, the control apparatus may obtain a second torque output by the steering wheel sensor 120, couple the second torque with a first torque generated by the control apparatus based on sensing, to obtain a torque used to perform steering control on the vehicle, and then output the torque used to perform steering control on the vehicle to the steering actuation apparatus 130. The steering actuation apparatus 130 performs steering control on the vehicle based on the torque used to perform steering control on the vehicle.

In an example, when the control apparatus 110 senses that the vehicle has a lane departure, the vehicle is about to collide with a vehicle on an adjacent lane, or the vehicle is about to collide with a road edge, the control apparatus 110 may activate emergency lane keeping (emergency lane keeping, ELK) assistance, and the control apparatus 110 generates a torque (for example, the first torque) to control the steering actuation apparatus 130 to implement lane keeping based on the torque. This avoids or slows down an unconscious lane departure of the vehicle, and collision with the vehicle on the adjacent lane or with the road edge.

In another example, when sensing that the collision occurs when the vehicle continues to travel, the control apparatus 110 may activate emergency steering assistance (emergency steer assistance, ESA), and the control apparatus 110 generates the torque (for example, the first torque) to control the steering actuation apparatus 130 to control a vehicle direction based on the torque, to avoid the collision.

In an activated state of the ADAS function like the ELK or the ESA, because the ADAS function actively intervenes in steering of the vehicle, the driver subconsciously resists the intervention of the ADAS when being not aware of the danger, and controls the steering wheel to generate a torque (for example, the second torque) for resisting the ADAS. An unconscious steering operation of the driver easily causes the control apparatus 110 to misjudge that the driver is completely in a loop, and exit the ADAS function to return driving right to the driver. After the ADAS function exits, reaction time left for the driver is extremely short, and there is a high probability that a vehicle collision accident occurs. This greatly affects driving safety.

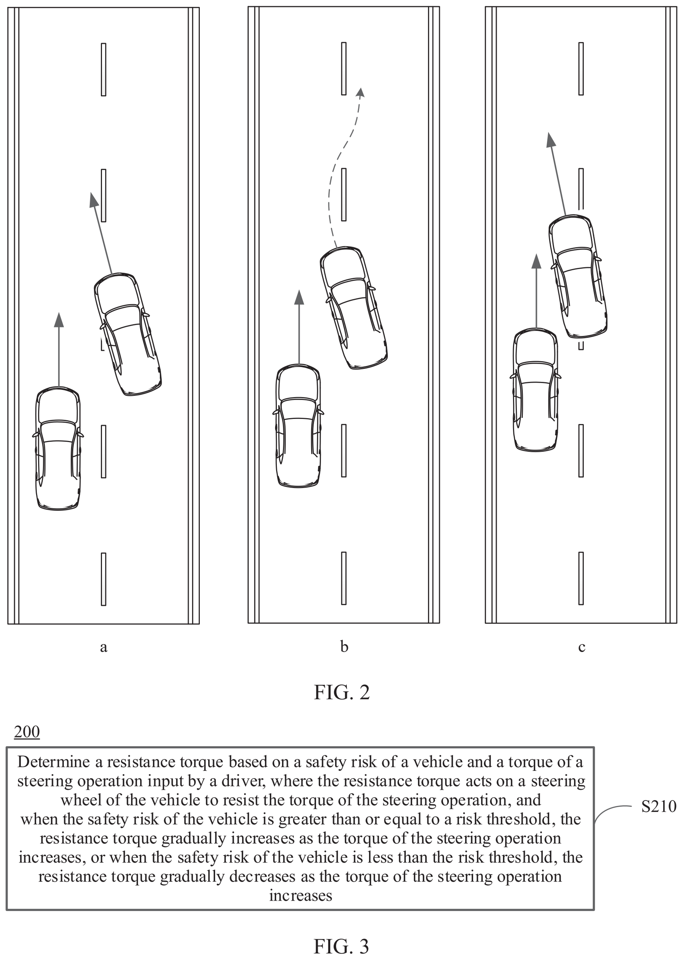

For example, with reference to a in FIG. 2, the control apparatus 110 detects that the vehicle departs to the left and there is a safety risk from a rear vehicle that is approaching. In this case, the ELK is activated to actively intervene in steering of the vehicle, expecting to correct the vehicle to a center of a lane based on an ELK track line (represented by a dashed line in the figure) shown in b in FIG. 2, to avoid the collision with the rear vehicle. However, when the driver is not aware of the safety risk in the rear left, the sudden intervention of the ELK function causes the driver to be panic. The driver subconsciously holds a steering wheel to resist the intervention of the ELK, causing the ELK to exit by mistake. With reference to c in FIG. 2, in this case, the vehicle is already very close to the rear vehicle, and a collision risk is very high. When the driver responds to the collision, the collision is inevitable. Similarly, when the control apparatus 110 detects that there is a safety risk in front of the vehicle, the driver does not brake or make an avoidance response in time, and emergency braking cannot avoid a collision, the ESA function is activated, and actively intervenes to control the vehicle to avoid the collision. In this case, the driver subconsciously holds the steering wheel and resists intervention of the ESA. Consequently, the control apparatus 110 may incorrectly determine that the driver is completely in the loop, and exit the ESA function to return the driving right to the driver. In this case, there is a high probability that a vehicle collision occurs.

It should be noted that the foregoing ELK and ESA are examples of automatic control, and do not constitute any limitation on this application. A similar problem also exists in another active safety assistance function related to horizontal control of the vehicle.

To resolve a problem that the safety risk is high because the ADAS function exits due to the subconscious action of the driver in an ADAS control process, in this embodiment of this application, the resistance torque is determined based on the safety risk of the vehicle and the torque of the steering operation input by the driver, and when the safety risk of the vehicle is high, the resistance torque is gradually increased, so that the driver senses the resistance torque from the steering wheel during the steering operation, and the driver is reminded that the current steering operation may affect driving safety. This avoids impact on driving safety caused by the steering operation input by the driver due to the subconscious action.

Further, when the safety risk of the vehicle is low, the resistance torque is gradually decreased, and a driving intention of the driver is complied with, thereby improving driving experience.

In addition, in this embodiment of this application, the torque of the steering operation input by the driver reflects a control intention of the driver, and when the control intention of the driver is a non-steering control intention, a weight of the torque generated by the ADAS is increased, in other words, steering control performed by the ADAS on the vehicle is maintained, to avoid a safety risk caused by mistaken exit of the ADAS function.

The second torque in the following is the torque of the steering operation input by the driver. For ease of description, the two expression manners are alternately used, and meanings expressed are consistent. Similarly, the first torque is a torque generated by the control chip when the driver inputs the steering operation, and the two may be replaced with each other.

It should be understood that, for ease of understanding and description, the following describes the method provided in embodiments of this application by using a control chip in a vehicle as an execution body. The control chip may be, for example, a component in the control apparatus 110 in FIG. 1. Certainly, the control chip may be replaced with a control apparatus, for example, the control apparatus 110 in FIG. 1 or another functional module that can invoke a program and execute the program.

However, it should be understood that this shall not constitute any limitation on an execution body of the method provided in this application. Any device may serve as the execution entity of the method provided in embodiments of this application provided that a program that records code of the method provided in embodiments of this application can be run to implement the method provided in embodiments of this application.

FIG. 3 is a schematic flowchart of a vehicle control method 200 according to an embodiment of this application. As shown in FIG. 3, the method 200 may include some or all of the following steps.

S210: Determine a resistance torque based on a safety risk of a vehicle and a torque of a steering operation input by a driver, where the resistance torque acts on a steering wheel of the vehicle to resist the torque of the steering operation.

It should be noted that, when the safety risk of the vehicle is greater than or equal to a risk threshold, the resistance torque gradually increases as a first torque increases, so that the driver feels the resistance torque from the steering wheel during the steering operation, and the driver is reminded that the current steering operation may affect driving safety. This avoids impact on the driving safety caused by the steering operation input by the driver due to a subconscious action. When the safety risk of the vehicle is less than the risk threshold, the resistance torque gradually decreases as the torque of the steering operation increases. In this way, driving safety is ensured while a driving intention of the driver is complied with, to improve driving experience.

In some embodiments, the safety risk of the vehicle is greater than or equal to the risk threshold, and when the torque of the steering operation is less than or equal to a torque threshold, the resistance torque gradually increases as the torque of the steering operation increases. That the torque of the steering operation is less than or equal to the torque threshold may be that a torque magnitude of the steering operation is less than or equal to a first torque threshold, or may be that torque duration of the steering operation is less than or equal to a second torque threshold, or may be that the torque magnitude of the steering operation is less than or equal to the first torque threshold and the torque duration is less than or equal to the second torque threshold.

The torque threshold may be a preset value in a control chip. Alternatively, the torque threshold may not be a preset value, but a value that is determined based on an algorithm and that is used to divide a first area and a second area. The first area may be understood as a control area in which a torque generated by the control chip is complied with, and the second area may be understood as a control area in which the steering operation of the driver is complied with. In the following, when a collaborative control coefficient is determined based on a fuzzy algorithm, the torque threshold may be determined based on the fuzzy algorithm.

That the resistance torque gradually increases as the torque of the steering operation increases may be that the resistance torque gradually increases at a preset speed in a process of increasing the torque of the steering operation, or the resistance torque increases based on a positive correlation relationship with the torque of the steering operation.

In some other embodiments, the safety risk of the vehicle is greater than or equal to the risk threshold, and when the torque of the steering operation is greater than the torque threshold, the resistance torque gradually decreases. In correspondence with the foregoing example, that the torque of the steering operation is greater than the torque threshold may be that the torque magnitude of the steering operation is greater than the first torque threshold, or may be that the torque duration of the steering operation is greater than the second torque threshold, or may be that the torque magnitude of the steering operation is greater than the first torque threshold and the torque duration is greater than the second torque threshold.

For example, the control chip may determine, based on the torque magnitude and the torque duration of the steering operation input by the driver, a control degree of the driver for the vehicle, and determine the resistance torque based on the control degree of the driver for the vehicle and the safety risk of the vehicle. The control degree of the driver for the vehicle may be quantized by using a control degree coefficient. A higher control degree indicates a larger value of the control degree coefficient. The control chip may determine the control degree coefficient based on the torque magnitude and the torque duration of the steering operation of the driver. Similarly, the safety risk of the vehicle may be quantized by using a safety risk coefficient. A higher safety risk of the vehicle indicates a larger value of the safety risk coefficient.

It should be noted that the driver may input the steering operation by rotating the steering wheel, for example, controlling, through the steering wheel, the vehicle to turn left (including controlling the vehicle to keep traveling in a current direction when the ADAS system performs right steering control on the vehicle), or turn right (including controlling the vehicle to keep traveling in a current direction when the ADAS system performs left steering control on the vehicle). The control chip may obtain, via a steering wheel sensor, the torque of the steering operation, for example, the torque magnitude and duration of the steering operation. The torque magnitude of the steering operation and the duration of the steering operation may reflect the control degree of the driver for steering of the vehicle, and the control degree of the driver for the steering of the vehicle may reflect a steering intention of the driver. For example, if the torque of the steering operation input by the driver through the steering wheel is larger and the duration is longer, the driver has a higher control degree on the steering of the vehicle, indicating that the control intention of the driver for the vehicle is more inclined to a steering control intention. On the contrary, if the torque of the steering operation input by the driver through the steering wheel is smaller and the duration is shorter, the driver has a lower control degree on the steering of the vehicle, indicating that the control intention of the driver for the vehicle is more inclined to a non-steering control intention, for example, a control intention of resisting ADAS active control.

The control degree coefficient $f_{driver}$ determined based on the torque magnitude resist_torque and the duration resist_time may be expressed as $f_{driver} = F_D$(resist_torque, resist_time).

Generally, the control degree coefficient is positively correlated with the torque magnitude of the steering operation, that is, a larger torque of the steering operation indicates a higher control degree coefficient. The control degree coefficient is positively correlated with the duration of the steering operation, that is, longer duration of the steering operation indicates a higher control degree coefficient. It should be understood that the duration is a continuously increasing amount. When the driver continuously performs the steering operation on the steering wheel, the control degree coefficient may be a continuously increasing value. Certainly, if the torque of the steering operation decreases when the driver performs the steering operation on the steering wheel, the control degree coefficient may also change with the torque. When the driver stops performing the steering operation on the vehicle, both the torque and the duration of the steering operation are zero. In this case, without considering impact of the steering operation of the driver on steering of the vehicle, the control chip performs steering control on the vehicle based on the torque (for example, the first torque) generated based on sensing.

Optionally, if the control degree coefficient indicates that the control intention of the driver for the vehicle is the non-steering control intention, the control degree coefficient is positively correlated with the resistance torque. For example, when the driver resists active intervention of an ADAS function in steering control of the vehicle, the driver subconsciously inputs the steering operation. In this case, a higher control degree of the driver for the vehicle indicates a higher resistance torque, to warn the user of a current mis-operation, so as to improve driving safety.

Optionally, when the control degree coefficient is less than or equal to the torque threshold, the control chip may determine that the control intention of the driver for the vehicle is the non-steering control intention; or when the control degree coefficient is greater than the torque threshold, the control chip may determine that the control intention of the driver for the vehicle is the steering control intention.

To balance driving safety and driving experience, whether to comply with the steering operation of the driver may be determined with reference to the safety risk of the vehicle. In some embodiments, the control chip may determine the safety risk coefficient of the vehicle in a steering direction based on road environment data, and then determine the resistance torque based on the safety risk coefficient and the control degree coefficient. The safety risk coefficient can be positively correlated with the resistance torque. In other words, a higher safety risk of the vehicle indicates a larger torque that is felt by the driver through the steering wheel and that resists the steering operation, and stronger warning effect, to improve driving safety.

The road environment data may be data collected by a vehicle sensor obtained by the control chip, and the road environment data may include a lane line, an obstacle, a traffic indication identifier, and the like. The obstacle may be a general term of a vehicle, an object, or a person that needs to be avoided in a traveling process of the vehicle.

For example, the control chip may determine a lane departure distance and/or estimated time to collision of the vehicle based on the road environment data. The estimated time to collision indicates time before collision between the vehicle and an obstacle in the steering direction of the steering operation. Further, the control chip may determine the safety risk coefficient based on the lane departure distance and/or the estimated time to collision.

For example, when the ELK function is activated, a lane departure distance (departure_distance) is positively correlated with the safety risk coefficient, estimated time to collision (time to collision, TTC) is positively correlated with the safety risk coefficient, and the safety risk coefficient $f_{risk}$ may be expressed as $f_{risk} = F_R$(TTC, departure_distance).

For another example, when the ESA function is activated, the estimated time to collision is positively correlated with the safety risk coefficient.

To accurately identify the driving intention, the control chip may determine the control intention of the driver for the vehicle with reference to the safety risk coefficient and the control degree coefficient. For example, when the safety risk coefficient of the control chip is greater than or equal to the risk threshold, and the control degree coefficient is less than or equal to the torque threshold, the control intention of the driver for the vehicle is the non-steering control intention. Similar to the torque threshold, the risk threshold may be a preset value in the control chip, or the risk threshold may not be a preset value, for example, a value that is determined based on an algorithm and that is used to divide a first area and a second area. In the following, when the collaborative control coefficient is determined based on the fuzzy algorithm, the risk threshold may be determined based on the fuzzy algorithm.

Optionally, when the control degree coefficient is less than or equal to the torque threshold, the control degree coefficient is positively correlated with the resistance torque; or when the control degree coefficient is greater than the torque threshold, the resistance torque gradually decreases.

In some embodiments, the control chip further determines, based on the safety risk of the vehicle and the torque of the steering operation, a torque used to perform steering control on the vehicle. For example, the following may be included: The control chip may determine the collaborative control coefficient based on the safety risk of the vehicle and the torque of the steering operation input by the driver, where the collaborative control coefficient indicates a weight of the first torque and/or a weight of the second torque; and couple the first torque with the second torque based on the collaborative control coefficient, to obtain the torque used to perform steering control on the vehicle.

When the control chip obtains the steering operation input by the driver, the control chip may generate the first torque based on sensing, to perform steering control on the vehicle based on the first torque. In this case, because the driver inputs the second torque by using the steering operation, the control chip may perform steering control on the vehicle with reference to the second torque and the first torque. For example, the first torque and the second torque are coupled based on the collaborative control coefficient, to obtain the torque used to perform steering control on the vehicle. A coupling manner of the first torque and the torque of the steering operation may be weighted summation.

The collaborative control coefficient may indicate the weight of the first torque. For example, if the collaborative control coefficient is 0.4, the weight of the first torque is 0.4. In this case, the weight of the second torque may be 0.6. Alternatively, the collaborative control coefficient may indicate the weight of the second torque. For example, if the collaborative control coefficient is 0.3, the weight of the second torque is 0.3. In this case, the weight of the first torque may be 0.7. Certainly, this application does not exclude that the collaborative control coefficient includes the weight of the first torque and the weight of the second torque. For example, the collaborative control coefficient includes 0.5 and 0.5, which respectively indicate that the weight of the first torque is 0.5 and the weight of the second torque is 0.5.

In this embodiment, when the first torque is generated, the control chip determines, based on the torque magnitude and the torque duration of the steering operation input by the driver, the control degree of the driver for the vehicle, and couples the first torque with the second torque based on the control degree of the driver for the vehicle, to perform steering control on the vehicle based on the torque obtained through coupling. The control degree may reflect the control intention of the driver. When the control degree indicates that the driver does not have the steering control intention, the control degree can be positively correlated with the weight of the first torque, and negatively correlated with the weight of the torque of the steering operation. When the driver does not have the steering control intention, the torque generated by the control chip is complied with, to avoid the impact on the driving safety caused by the steering operation input by the driver due to the subconscious action, and improve driving safety.

As described above, when the control degree coefficient is less than or equal to the torque threshold, the control degree coefficient indicates that the control intention of the driver for the vehicle is the non-steering control intention; or when the control degree coefficient is greater than the torque threshold, the control degree coefficient indicates that the control intention of the driver for the vehicle is the steering control intention.

Optionally, when the control degree coefficient is greater than the torque threshold, that is, the control degree coefficient indicates that the control intention of the driver for the vehicle is the steering control intention, in this case, the control chip may control the weight of the first torque to gradually decrease, and the weight of the torque of the steering operation to gradually increase. Optionally, the control chip may control the collaborative control coefficient to gradually change based on a preset change rate, or the control chip may determine a corresponding collaborative control coefficient based on the control degree coefficient. This is not limited in this application.

To balance driving safety and driving experience, whether to comply with the steering operation of the driver may be determined with reference to the safety risk of the vehicle. In some embodiments, the control chip may determine the safety risk coefficient of the vehicle in the steering direction based on road environment data, and then determine the collaborative control coefficient based on the safety risk coefficient and the control degree coefficient.

To accurately identify the driving intention, the control chip may determine the control intention of the driver for the vehicle with reference to the safety risk coefficient and the control degree coefficient. This part has been described in the foregoing example. For brevity, details are not described again.

In some embodiments, the control chip may determine the control intention of the driver for the vehicle based on the safety risk coefficient. For example, when the safety risk is greater than or equal to the risk threshold, as the control degree coefficient increases, the weight of the first torque may first increase and then decrease, and the weight of the torque of the steering operation gradually increases. When the safety risk is less than the risk threshold, as the control degree coefficient increases, the weight of the first torque may gradually decrease, and the torque of the steering operation gradually increases.

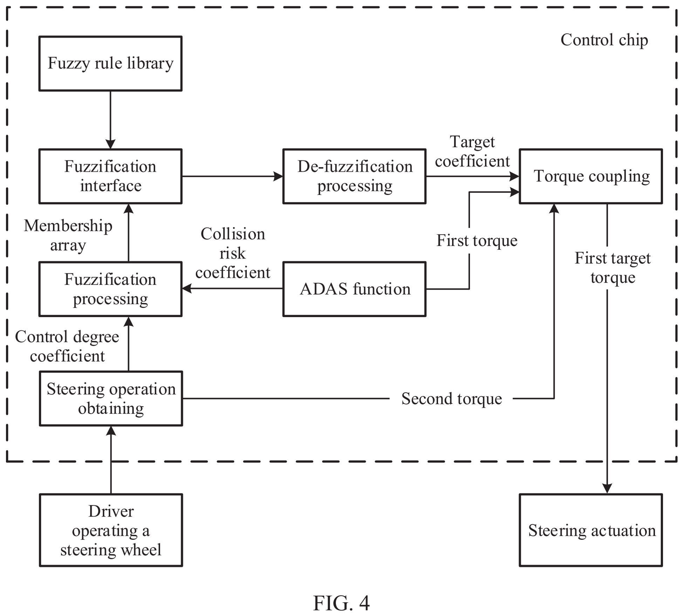

With reference to FIG. 4, the following describes an embodiment of this application by using an example in which a target parameter is determined based on the fuzzy algorithm.

FIG. 4 is a schematic flowchart of a vehicle control method 300 according to an embodiment of this application. As shown in FIG. 4, a driver operates a steering wheel to input a steering operation, and a control chip obtains the steering operation, and determines a control degree coefficient of the driver on a vehicle based on the steering operation. When obtaining the steering operation, the control chip generates a first torque based on sensing under an ADAS function (for example, ELK or ESA), and determines a safety risk coefficient of the vehicle based on sensing.

Further, the control chip performs fuzzification processing on the safety risk coefficient to obtain a fuzzification result of a safety risk. For example, the safety risk coefficient is input into a membership function, to obtain a membership array corresponding to the safety risk. For example, the membership array $f_{risk\_mem}$, $c_{risk}$ corresponding to the safety risk may be represented as $f_{risk\_mem}$, $c_{risk} = F_{R\_mem}(f_{risk})$, where is $F_{R\_mem}$ the membership function.

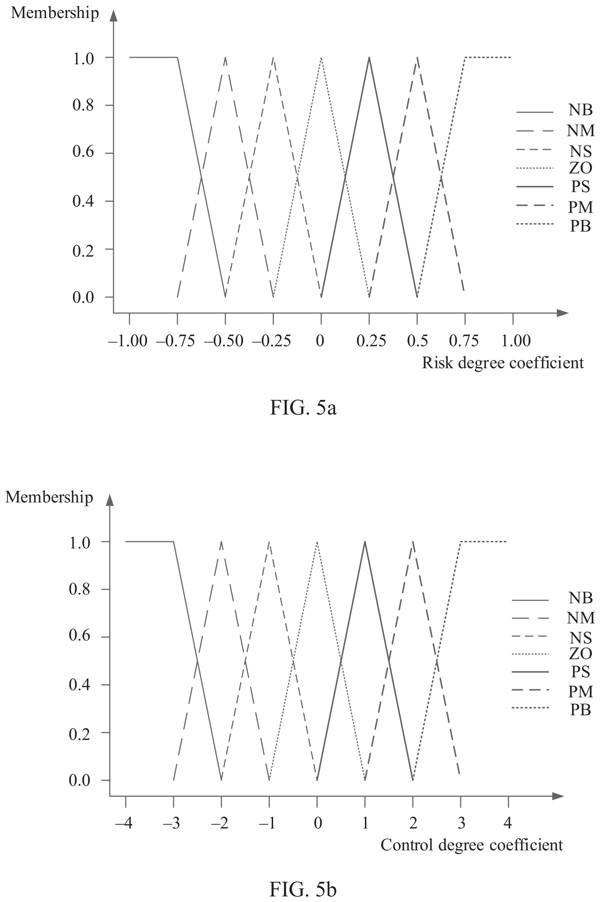

For the membership function corresponding to the safety risk, refer to FIG. 5a. A fuzzy set domain includes seven fuzzy levels, each fuzzy level corresponds to one language value, and the seven language values are respectively {NB, NM, NS, ZO, PS, PM and PB}. Safety risks represented by NB to ZO decrease sequentially, and safety risks represented by ZO to PB increase sequentially.

Similarly, the control chip performs fuzzification processing on a control degree coefficient to obtain a fuzzification result of a control degree. A membership array $f_{driver\_mem}$, $c_{driver}$ corresponding to the control degree may be represented as $f\ driver\ mem$ $c_{driver} = F_{D\_mem}(f_{driver})$, where $F_{D\_mem}$ is a membership function.

For the membership function corresponding to the control degree, refer to FIG. 5b. The fuzzy set domain includes seven fuzzy levels, each fuzzy level corresponds to one language value, and the seven language values are respectively {NB, NM, NS, ZO, PS, PM and PB}. Control degrees represented by NB to ZO decrease sequentially, and control degrees represented by ZO to PB increase sequentially.

A fuzzy rule library is determined based on the membership function corresponding to the safety risk and the membership function corresponding to the control degree, and the control chip queries the fuzzy rule library based on the fuzzification result of the safety risk and the fuzzification result of the control degree, for example, invokes a fuzzification interface to query the fuzzy rule library, to obtain a query result. For the fuzzy rule library, refer to the following Table 1:

Table 1

| P    C | NB | NM | NS | ZO | PS | PM | PB |
|---|---|---|---|---|---|---|---|
| NB | NM | NB | NB | NB | NB | NB | NM |
| NM | ZO | NS | NM | NB | NM | NS | ZO |
| NS | PB | PS | ZO | NS | ZO | PS | PB |
| ZO | PM | PS | ZO | ZO | ZO | PS | PM |
| PS | PB | PS | ZO | NS | ZO | PS | PB |

| P    C | NB | NM | NS | ZO | PS | PM | PB |
|---|---|---|---|---|---|---|---|
| PM | ZO | NS | NM | NB | NM | NS | ZO |
| PB | NM | NB | NB | NB | NB | NB | NM |

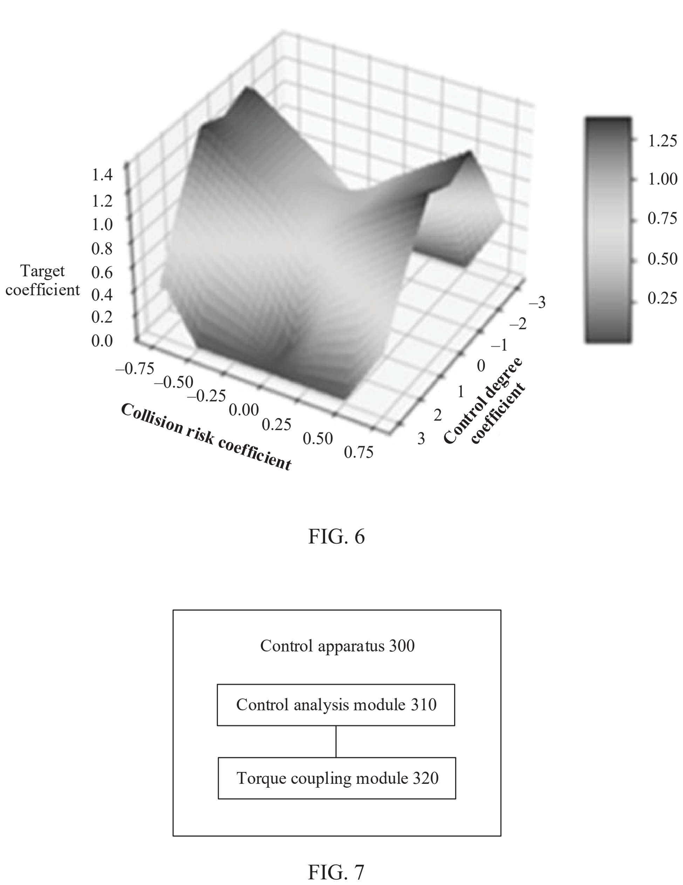

FIG. 6 is a three-dimensional representation of Table 1. Refer to FIG. 6 and Table 1. It is assumed that a collaborative control coefficient indicates a weight of the first torque, and collaborative control coefficients represented by the language values NB to PB increase sequentially. Therefore, as the control degree coefficient C increases, the collaborative control coefficient first increases and then decreases; and as the safety risk coefficient P increases, the collaborative control coefficient gradually increases.

The ELK is used as an example. Fuzzification processing is performed based on the fuzzy rule library, so that it can be ensured that the weight of the first torque is high when the vehicle has a high safety risk and a control degree of a driver on the vehicle is low, and that the weight of the first torque is low when the vehicle has a low safety risk and the control degree of the driver for the vehicle is high. When the safety risk is high, as the control degree of the driver for the vehicle changes in ascending order, the weight of the first torque first increases, to resist panic or a subconscious mis-operation of the driver, and then, if the driver continuously resists, the control degree of the driver continues to increase, and the weight of the first torque gradually decreases.

It should be noted that, in this embodiment of this application, the first torque is generally a torque generated by the control chip based on sensing, and is not specifically a torque generated at a moment. In other words, the first torque may change with sensed data.

In this application, only the membership fuzzification algorithm is used as an example for description, but this is not limited. For example, a fuzzy level set algorithm, a single-point fuzzy set algorithm, or the like may be further used.

Further, the control chip performs de-fuzzification processing on the query result to obtain the collaborative control coefficient $f_{coop}$, which may be expressed as $f_{coop} = F_{rule}\left(\frac{\sum_{i=0}^{n} f_{risk_i} c_i}{\sum_{i=0}^{n} c_i}, \frac{\sum_{j=0}^{m} f_{driver_j} c_j}{\sum_{j=0}^{m} c_j}\right)$, and $f_{risk_i}$ is an $i^{th}$ fuzzy level in n fuzzy levels of the safety risk, $c_i$ is a weight of the $i^{th}$ fuzzy level of the safety risk, $f_{driver_j}$ is a $j^{th}$ fuzzy level in m fuzzy levels of the control degree, and $c_j$ is a weight of the $j^{th}$ fuzzy level of the safety risk.

The control chip performs torque coupling on the first torque and a second torque based on the collaborative control coefficient, to obtain a torque used to perform steering control on the vehicle, and outputs the torque used to perform steering control on the vehicle, for example, outputs the torque used to perform steering control on the vehicle to a steering actuation apparatus, so that the steering actuation apparatus controls steering of the vehicle based on the torque used to perform steering control on the vehicle.

FIG. 7 is a block diagram of a control apparatus of a vehicle according to an embodiment of this application. As shown in FIG. 7, a control apparatus 300 of a vehicle includes a control analysis module 310.

The control analysis module 310 may be configured to determine a resistance torque based on a safety risk of a vehicle and a torque of a steering operation input by a driver, where the resistance torque acts on a steering wheel of the vehicle to resist the torque of the steering operation. When the safety risk of the vehicle is greater than or equal to a risk threshold, the resistance torque gradually increases as the torque of the steering operation increases; or when the safety risk of the vehicle is less than the risk threshold, the resistance torque gradually decreases as the torque of the steering operation increases.

In some embodiments, the control analysis module 310 is further configured to determine a collaborative control coefficient based on the safety risk of the vehicle and the torque of the steering operation input by the driver, where the collaborative control coefficient indicates a weight of a first torque and/or a weight of the torque of the steering operation, and the first torque is a steering torque generated by a control chip when the driver inputs the steering operation. The apparatus 300 further includes a torque coupling module 320, and the torque coupling module 320 is configured to couple the first torque with the torque of the steering operation based on the collaborative control coefficient, to obtain a torque used to perform steering control on the vehicle.

It should be understood that specific processes in which the modules perform the foregoing corresponding steps are described in detail in the foregoing method embodiments. For brevity, details are not described herein again.

Division of the modules in the apparatus 300 is merely division of logical functions. During actual implementation, all or some of the units may be integrated into one physical entity, or may be physically separated.

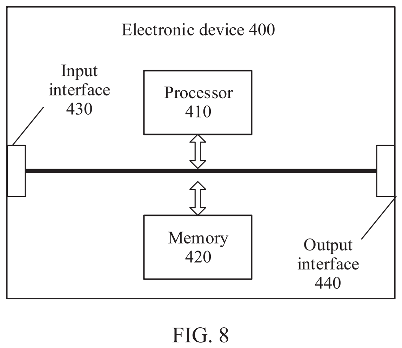

FIG. 8 is a diagram of a structure of an electronic device 400 according to an embodiment of this application. The electronic device 400 may include a processor 410 and a memory 420. The processor 410 and the memory 420 communicate with each other through an internal connection path. The memory 420 is configured to store instructions, and the processor 410 is configured to execute the instructions stored in the memory 420.

Optionally, the memory 420 may include a read-only memory and a random access memory, and provide instructions and data for the processor 410. The memory 420 may be a separate component, or may be integrated in the processor 410.

In some embodiments, the electronic device 400 may further include an input interface 430. The processor 410 may control the input interface 430 to communicate with another device or chip, and specifically, may obtain information or data sent by the another device or chip.

In some embodiments, the electronic device 400 may further include an output interface 440. The processor 410 may control the output interface 440 to communicate with another device or chip, and specifically, may output information or data to the another device or chip.

In some embodiments, the electronic device 400 may implement corresponding procedures of the methods in embodiments of this application. For brevity, details are not described herein again.

It should be understood that the processor in this embodiment of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct rambus RAM, DR RAM). It should be noted that the memory in the systems and methods described in this specification includes but is not limited to these memories and any memory of another appropriate type.

It should be understood that the foregoing memory is an example but not a limitation. For example, the memory in this embodiment of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (Direct Rambus RAM, DR RAM), and the like. In other words, the memory described in this embodiment of this application is intended to include, but not limited to, these memories and any memory of another appropriate type.

An embodiment of this application further provides a computer-readable storage medium, configured to store a computer program.

In some embodiments, the computer program enables the computer to perform corresponding procedures in the methods in embodiments of this application. For brevity, details are not described herein again.

An embodiment of this application further provides a computer program product, including computer program instructions.

In some embodiments, the computer program instructions enable a computer to perform corresponding procedures in the methods in embodiments of this application. For brevity, details are not described herein again.

Embodiments of this application further provide a computer program.

In some embodiments, when the computer program runs on a computer, the computer is enabled to perform corresponding procedures in the methods in embodiments of this application. For brevity, details are not described herein again.

An embodiment of this application further provides a vehicle.

In some embodiments, the intelligent vehicle includes the control apparatus or the control chip of the vehicle in embodiments of this application.

In some embodiments, the intelligent vehicle further includes the steering control apparatus in embodiments of this application.

In some embodiments, the intelligent vehicle includes the steering wheel sensor in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A vehicle control method, comprising:

    determining a resistance torque based on a safety risk of a vehicle and a torque of a steering operation input by a driver, wherein the resistance torque acts on a steering wheel of the vehicle to resist the torque of the steering operation, wherein

when the safety risk of the vehicle is greater than or equal to a risk threshold, the resistance torque gradually increases as the torque of the steering operation increases; or

when the safety risk of the vehicle is less than the risk threshold, the resistance torque gradually decreases as the torque of the steering operation increases.

2. The method according to claim 1, wherein the safety risk of the vehicle is greater than or equal to the risk threshold, and when the torque of the steering operation is less than or equal to a torque threshold, the resistance torque gradually increases as the torque of the steering operation increases, or when the torque of the steering operation is greater than the torque threshold, the resistance torque gradually decreases.

3. The method according to claim 1 or 2, wherein the determining a resistance torque based on a safety risk of a vehicle and a torque of a steering operation input by a driver comprises:

determining the resistance torque based on the safety risk of the vehicle, and a torque magnitude and torque duration of the steering operation, wherein

when the safety risk of the vehicle is greater than or equal to the risk threshold, the resistance torque gradually increases as the torque magnitude and the torque duration of the steering operation increase; or

when the safety risk of the vehicle is less than the risk threshold, the resistance torque gradually decreases as the torque magnitude and the torque duration of the steering operation increase.

4. The method according to any one of claims 1 to 3, further comprising:

determining a collaborative control coefficient based on the safety risk of the vehicle and the torque of the steering operation input by the driver, wherein the collaborative control coefficient indicates a weight of a first torque and/or a weight of the torque of the steering operation, and the first torque is a steering torque generated by a control chip when the driver inputs the steering operation; and

coupling the first torque with the torque of the steering operation based on the collaborative control coefficient, to obtain a torque used to perform steering control on the vehicle.

5. The method according to claim 4, wherein when the safety risk of the vehicle is greater than or equal to the risk threshold, the weight of the first torque gradually increases as the torque of the steering operation increases; or when the safety risk of the vehicle is less than the risk threshold, the weight of the first torque gradually decreases as the torque of the steering operation increases.

6. The method according to claim 5, wherein the safety risk of the vehicle is greater than or equal to the risk threshold, and when the torque of the steering operation is less than or equal to the torque threshold, the weight of the first torque gradually increases as the steering operation increases, or when the torque of the steering operation is greater than the torque threshold, the weight of the first torque gradually decreases.

7. The method according to any one of claims 4 to 6, wherein the determining a collaborative control coefficient based on the safety risk of the vehicle and the torque of the steering operation input by the driver comprises:

determining the collaborative control coefficient based on the safety risk of the vehicle and the torque magnitude and the torque duration of the steering operation, wherein

when the safety risk of the vehicle is greater than or equal to the risk threshold, the weight of the first torque gradually increases as the torque magnitude and the torque duration of the steering operation increase; or

when the safety risk of the vehicle is less than the risk threshold, the weight of the first torque gradually decreases as the torque magnitude and the torque duration of the steering operation increase.

8. The method according to any one of claims 4 to 7, wherein the determining a collaborative control coefficient based on the safety risk of the vehicle and the torque of the steering operation input by the driver comprises:

performing fuzzification processing on the safety risk of the vehicle to obtain a fuzzification result of the safety risk, and performing fuzzification processing on the torque of the steering operation to obtain a fuzzification result of the torque of the steering operation;

querying a fuzzy rule library based on the fuzzification result of the safety risk and the fuzzification result of the torque of the steering operation; and
performing defuzzification processing on a query result to obtain the collaborative control coefficient.

9. The method according to any one of claims 1 to 8, further comprising:

determining a lane departure distance and/or estimated time to collision based on road environment data of the vehicle, wherein the estimated time to collision indicates time before collision between the vehicle and an obstacle in a steering direction of the steering operation; and
determining the safety risk of the vehicle based on the lane departure distance and/or the estimated time to collision.

10. A control apparatus, comprising a module configured to perform the method according to any one of claims 1 to 9.

11. A chip, comprising a processor, configured to invoke computer instructions from a memory and run the computer instructions, to enable a device in which the chip is installed to perform the method according to any one of claims 1 to 9.

12. An electronic device, comprising a processor and a memory, wherein the memory is configured to store a computer program, and the processor is configured to invoke and run the computer program stored in the memory, to perform the method according to any one of claims 1 to 9.

13. A computer program product, comprising computer program instructions, wherein the computer program instructions enable a computer to perform the method according to any one of claims 1 to 9.

14. A computer-readable storage medium, configured to store computer program instructions, wherein the computer program enables a computer to perform the method according to any one of claims 1 to 9.

15. A vehicle, comprising a control apparatus, wherein the control apparatus is configured to perform the method according to any one of claims 1 to 9.

16. The vehicle according to claim 15, further comprising a steering control apparatus, wherein

the control apparatus sends, to the steering control apparatus, a torque used to perform steering control on the vehicle; and
the steering control apparatus performs steering control on the vehicle based on the torque.

Vehicle 100

FIG. 1

a                                    b                                    c

FIG. 2

200

| Determine a resistance torque based on a safety risk of a vehicle and a torque of a steering operation input by a driver, where the resistance torque acts on a steering wheel of the vehicle to resist the torque of the steering operation, and when the safety risk of the vehicle is greater than or equal to a risk threshold, the resistance torque gradually increases as the torque of the steering operation increases, or when the safety risk of the vehicle is less than the risk threshold, the resistance torque gradually decreases as the torque of the steering operation increases |

S210

FIG. 3

FIG. 4

FIG. 5a

FIG. 5b

FIG. 6

FIG. 7

FIG. 8

## INTERNATIONAL SEARCH REPORT

| International application No. |
| --- |
| **PCT/CN2024/074535** |

### A. CLASSIFICATION OF SUBJECT MATTER

B60W 30/09(2012.01)i;  B62D 5/00(2006.01)i;  B62 D6/00(2006.01)i

According to International Patent Classification (IPC) or to both national classification and IPC

### B. FIELDS SEARCHED

Minimum documentation searched (classification system followed by classification symbols)

IPC:B60W B62D

Documentation searched other than minimum documentation to the extent that such documents are included in the fields searched

Electronic data base consulted during the international search (name of data base and, where practicable, search terms used)

CNABS, DWPI, CNTXT, ENTXT, CNKI: 抵抗, 反向, 扭矩, 方向盘, 防止, 猛打, anti torque, reverse torque, steering wheel, prevent, slam, sharply

### C. DOCUMENTS CONSIDERED TO BE RELEVANT

| Category* | Citation of document, with indication, where appropriate, of the relevant passages | Relevant to claim No. |
| --- | --- | --- |
| X | JP H09221052 A (HONDA MOTOR CO., LTD.) 26 August 1997 (1997-08-26) description, paragraphs 0006-0050, claims 1-4, and figures 1-14 | 1-16 |
| X | CN 107128354 A (BEIJING ELECTRIC VEHICLE CO., LTD.) 05 September 2017 (2017-09-05) description, paragraphs 0050-0093, claims 1-4, and figures 1-16 | 1-16 |
| A | CN 112937680 A (HEMEI (ZHEJIANG) AUTOMOBILE CO., LTD.) 11 June 2021 (2021-06-11) entire document | 1-16 |
| A | CN 113771848 A (JIANGLING MOTORS CO., LTD.) 10 December 2021 (2021-12-10) entire document | 1-16 |
| A | CN 114312980 A (GREAT WALL MOTOR CO., LTD.) 12 April 2022 (2022-04-12) entire document | 1-16 |
| A | JP H0826128 A (FUJI HEAVY INDUSTRIES LTD.) 30 January 1996 (1996-01-30) entire document | 1-16 |

☑ Further documents are listed in the continuation of Box C.  ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **29 February 2024** | **21 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/074535** |

### C. DOCUMENTS CONSIDERED TO BE RELEVANT

| Category* | Citation of document, with indication, where appropriate, of the relevant passages | Relevant to claim No. |
| --- | --- | --- |
| A | US 2003221898 A1 (AISIN SEIKI KABUSHIKI KAISHA, TOYODA KOKI KABUSHIKI KAISHA AND ADVICS CO., LTD.) 04 December 2003 (2003-12-04) entire document | 1-16 |

Form PCT/ISA/210 (second sheet) (July 2022)

## INTERNATIONAL SEARCH REPORT
### Information on patent family members

International application No.

**PCT/CN2024/074535**

| Patent document cited in search report | | | Publication date (day/month/year) | Patent family member(s) | | | Publication date (day/month/year) |
|---|---|---|---|---|---|---|---|
| JP | H09221052 | A | 26 August 1997 | JP | 3638169 | B2 | 13 April 2005 |
| CN | 107128354 | A | 05 September 2017 | None | | | |
| CN | 112937680 | A | 11 June 2021 | None | | | |
| CN | 113771848 | A | 10 December 2021 | None | | | |
| CN | 114312980 | A | 12 April 2022 | None | | | |
| JP | H0826128 | A | 30 January 1996 | JP | 3578488 | B2 | 20 October 2004 |
| US | 2003221898 | A1 | 04 December 2003 | DE | 60325961 | D1 | 12 March 2009 |
| | | | | EP | 1354788 | A1 | 22 October 2003 |
| | | | | EP | 1354788 | B1 | 18 November 2009 |
| | | | | US | 2010161180 | A1 | 24 June 2010 |
| | | | | US | 8997919 | B2 | 07 April 2015 |
| | | | | EP | 2193978 | A1 | 09 June 2010 |
| | | | | EP | 2193978 | B1 | 14 March 2012 |
| | | | | EP | 2093126 | A1 | 26 August 2009 |
| | | | | EP | 2093126 | B1 | 23 May 2012 |
| | | | | JP | 2003291838 | A | 15 October 2003 |
| | | | | JP | 3908074 | B2 | 25 April 2007 |
| | | | | DE | 60330089 | D1 | 31 December 2009 |
| | | | | EP | 1502838 | A2 | 02 February 2005 |
| | | | | EP | 1502838 | A3 | 11 May 2005 |
| | | | | EP | 1502838 | B1 | 21 January 2009 |
| | | | | EP | 1502838 | B8 | 08 April 2009 |
| | | | | US | 2007294011 | A1 | 20 December 2007 |
| | | | | US | 7699137 | B2 | 20 April 2010 |
| | | | | US | 7374014 | B2 | 20 May 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310388931